# EUROPEAN PATENT APPLICATION

(11) **EP 4 564 241 A1**
(43) Date of publication of application: **04.06.2025**
(21) Application number: 23213334.8
(22) Date of filing: 30.11.2023
(51) Int. Cl.: G06N 20/00, G06F 16/906, G05D 1/00

(54) **A METHOD FOR DETERMINING A DISTRIBUTION OF A TRAINING DATASET**

(71) Applicant: Zenseact AB, 417 56 Göteborg (SE)
(72) Inventor: GYLLENHAMMAR, Magnus, 435 43 Pixbo (SE); TONDERSKI, Adam, 426 53 Göteborg (SE); PETERSSON, Christoffer, 426 58 Västra Frölunda (SE)
(74) Representative: Zacco Sweden AB

(57) **Abstract**

The present inventive concept relates to a computer-implemented method (100) for determining a distribution of a training dataset for subsequent training of a machine learning model of an automated driving system, as well as other aspects thereof. The method (100) comprises: providing (S102) a first dataset by selecting, based on a candidate distribution, data samples from a second dataset of available training data; training (S104) the machine learning model on the first dataset; evaluating (S108) the machine learning model according to an evaluation criterion; and updating (S112) the candidate distribution in view of the evaluation, thereby forming an updated candidate distribution. The present inventive concept further relates to a method (200) for forming a training dataset for subsequent training of a machine learning model, as well as other aspects thereof.

## Description

### TECHNICAL FIELD

The present inventive concept relates to the field of autonomous vehicles. In particular, it is related to methods and devices for determining a distribution of a training data set for use in subsequent training of a machine learning model of an autonomous driving system.

### BACKGROUND

With the development of technology in recent years, image capturing and processing techniques have become widely used in different fields of technology. In particular, vehicles produced today are commonly equipped with some form of vision or perception system for enabling new functionalities. Moreover, an increasing portion of modern vehicles has advanced driver-assistance systems (ADAS) to increase vehicle safety and more generally road safety. ADAS - which for instance may be represented by adaptive cruise control (ACC), collision avoidance system, forward collision warning, lane support systems, etc. - are electronic systems that may aid a driver of the vehicle. Today, there is ongoing research and development within a number of technical areas associated to both the ADAS and the Autonomous Driving (AD) field. ADAS and AD may also be referred to under the common term Automated Driving System (ADS) corresponding to all of the different levels of automation as for example defined by the SAE J3016 levels (0 - 5) of driving automation.

While safety and performance are integral considerations for developing an ADS, the cost of the system is also highly influential, not the least for online solutions implemented in the vehicles. The compute footprint available for the ADS is restricted in hardware cost and power consumption of the chips and algorithms used in operation. This, in turn, results in a restriction to the algorithms possible for deployment on such platforms. The ADS, or perception system thereof, commonly relies on machine learning models to some extent. Machine learning models, in particular those relying on deep neural networks, are typically associated with relatively high computational cost. The compute footprint of such models will therefore be limited in terms of the number of parameters (weights and biases) and possible architectural configurations (e.g. blocks, layers, etc.). As a further consequence, a limited compute footprint of the deployed models means limited learning capacity, which in practice means that optimal inference capabilities of the network has to be achieved by training on a finite, and limited training dataset. Ways of achieving the best possible performance, given these restrictions is therefore sought-after. The problem is even further aggravated for models used in the context of vehicles, as it then needs to handle the great variation in possible scenarios and vast amounts of objects which can occur in a driving scenario. This puts high demands on the capability of the models. There is therefore need for improvements in regards to more efficient training and use of machine learning models, especially in the field of autonomous driving.

### SUMMARY

The herein disclosed technology seeks to mitigate, alleviate, or eliminate one or more of the above-identified deficiencies and disadvantages in the prior art to address various problems relating to development of automated driving systems, ADS. In particular, the disclosed technology provides ways of increasing efficiency of training and use of machine learning models of an ADS. More specifically, the inventors has realized a new and improved way of determining a distribution for a training dataset for subsequent training of a machine learning model. The distribution may help towards optimizing the selection of training data from a finite training dataset, as well as how to balance between various types of training samples, in order to improve model performance. The latter may for instance be relevant for dealing with rare or otherwise challenging (for the model) scenarios, such that those are not drowned in the more common and simple data samples of the dataset.

The proposed techniques help towards optimizing the performance of the machine learning model, given a set of available training data, but it may also help guide data collection activities from a fleet of vehicles, such that a balanced mix data samples, corresponding to the determined data distribution, is provided as to result in the optimal data being collected.

Various aspects and embodiments of the disclosed invention are defined below and in the accompanying independent and dependent claims.

According to a first aspect, there is provided a computer-implemented method for determining a distribution of a training dataset for subsequent training of a machine learning model of an automated driving system. The method comprises providing a first dataset by selecting, based on a candidate distribution, data samples from a second dataset of available training data. The method further comprises training the machine learning model on the first dataset. The method further comprises evaluating the machine learning model according to an evaluation criterion. The method further comprises updating the candidate distribution in view of the evaluation, thereby forming an updated candidate distribution. The updated candidate distribution may then be used as the determined distribution for the dataset for subsequent training of the machine learning model.

The presently disclosed technology provides a holistic approach of determining the distribution which can be optimized over the entire training dataset, rather than on individual data sample level. Current ways of forming a training set can involve evaluating each data sample to classify them as either "important" or not. The training dataset may then be formed by selecting those data samples that was found to be important. However, simply collecting the most important data samples will not necessarily result in a well-distributed training dataset. The proposed solution instead looks at a bigger picture by evaluating the distribution on a training dataset level. The resulting distribution then enables a machine learning model subsequently trained using a training dataset having the determined distribution to achieve better performance.

A further possible associated advantage may be that the training process can be made more efficient in terms of time and computational resources as the training dataset can be optimized over a larger dataset of available data samples. More specifically, forming a training dataset by sampling a larger dataset based on a distribution can enable a reduction in the number of training data samples needed for training of the machine learning model. This means that the training process can be performed in less time, and with less computational resources.

Even further, the proposed solution allows for a more efficient data collection, which yields improved performance of the deployed machine learning model.

For the reasons give above, the present technology further facilitates in-vehicle learning, i.e. eventually enabling the model to be trained online, in the vehicle. This can be enabled thanks to the determined distribution which can reduce the size of the training dataset, while also improving the results of the subsequent training of the model.

Moreover, the proposed solution can ensure balancing between data samples, such as between "rare" and more readily available data samples.

According to a second aspect, there is provided a computer program product comprising instructions which when the program is executed by a computing device, causes the computing device to carry out the method according to any embodiment of the first aspect. According to a third aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. Any of the above-mentioned features and advantages of the first aspect, when applicable, apply to the second and third aspect as well. In order to avoid undue repetition, reference is made to the above.

According to a fourth aspect, there is provided a device for determining a distribution of a training dataset for subsequent training of a machine learning model of an automated driving system. The device comprises control circuitry. The control circuitry is configured to provide a first dataset by selecting, based on a candidate distribution, data samples from a second dataset of available training data. The control circuitry is further configured to train the machine learning model on the first dataset. The control circuitry is further configured to evaluate the machine learning model according to an evaluation criterion. The control circuitry is further configured to update the candidate distribution in view of the evaluation, thereby forming an updated candidate distribution. Any of the above-mentioned features and advantages of the previous aspects, when applicable, apply to the fourth aspect as well. In order to avoid undue repetition, reference is made to the above.

According to a fifth aspect, there is provided a method for forming a training dataset for subsequent training of a machine learning model. The method comprises obtaining a distribution of the training dataset determined according to the method according to any embodiment of the first aspect. The method further comprises forming the training dataset based on the obtained distribution. Any of the above-mentioned features and advantages of the previous aspects, when applicable, apply to the fifth aspect as well. In order to avoid undue repetition, reference is made to the above.

According to a sixth aspect, there is provided a computer program product comprising instructions which when the program is executed by a computing device, causes the computing device to carry out the method according to any embodiment of the fifth aspect. According to a seventh aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the fifth aspect. Any of the above-mentioned features and advantages of the previous aspect, when applicable, apply to the sixth and seventh aspect as well. In order to avoid undue repetition, reference is made to the above.

According to an eight aspect, there is provided a device or forming a training dataset for subsequent training of a machine learning model. The device comprises control circuitry. The control circuitry is configured to obtain a distribution of the training dataset determined according to the method according to any embodiment of the first aspect. The control circuitry is further configured to form the training dataset based on the obtained distribution. Any of the above-mentioned features and advantages of the previous aspects, when applicable, apply to the eight aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method for determining a distribution of a training dataset for subsequent training of a machine learning model of an automated driving system, in accordance with some embodiments.
Figure 2 is a schematic flowchart representation of a method for forming a training dataset for subsequent training of a machine learning model, in accordance with some embodiments.
Figure 3 is a schematic illustration of a device for determining a distribution of a training dataset for subsequent training of a machine learning model of an automated driving system, in accordance with some embodiments.
Figure 4 is a schematic illustration of a device for forming a training dataset for subsequent training of a machine learning model, in accordance with some embodiments.
Figure 5 is a schematic illustration of a vehicle in accordance with some embodiments.
Figure 6 is a schematic illustration of a system, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms.

These terms are only used to distinguish one element from another. For example, a first element could be termed a second element, and, similarly, a second element could be termed a first element, without departing from the scope of the embodiments. The first element and the second element are both elements, but they are not the same element.

As used herein, the wording "one or more of' a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

Throughout the present disclosure, reference is made to a machine learning model (may also be referred to as machine-learning algorithm, network, neural network, deep learning network and so forth) which herein refers to any computational system or algorithm that is trained on data to make predictions or decisions, e.g. by learning patterns and relationships from training data and applying that knowledge on new input data.

The machine learning model may be a model configured to process any type of sensor data of a vehicle, such as image data, LIDAR data, RADAR data, etc. The machine learning model may e.g. be a perception model, an object detection model, an object classification model, an object tracking model, a lane estimation model, a free-space estimation model, a trajectory prediction model, an obstacle avoidance model, a path planning model, a scene classification model, a traffic sign classification model etc. Moreover, the machine learning model may encompass different architectures, including but not limited to convolutional neural networks (CNNs), recurrent neural networks (RNNs), and other existing or future alternatives.

The deployment of machine learning models typically involves a training phase where the model learns from labeled or unlabeled training data to achieve accurate predictions during a subsequent inference phase. The training data (as well as input data during inference) may e.g. be an image, or sequence of images, LIDAR data (i.e. a point cloud), radar data etc. Furthermore, the training/input data may comprise a combination or fusion of one or more different data types. The training/input data may for instance comprise both an image depicting an annotated object and corresponding LIDAR point cloud comprising the same annotated object.

The machine learning models may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

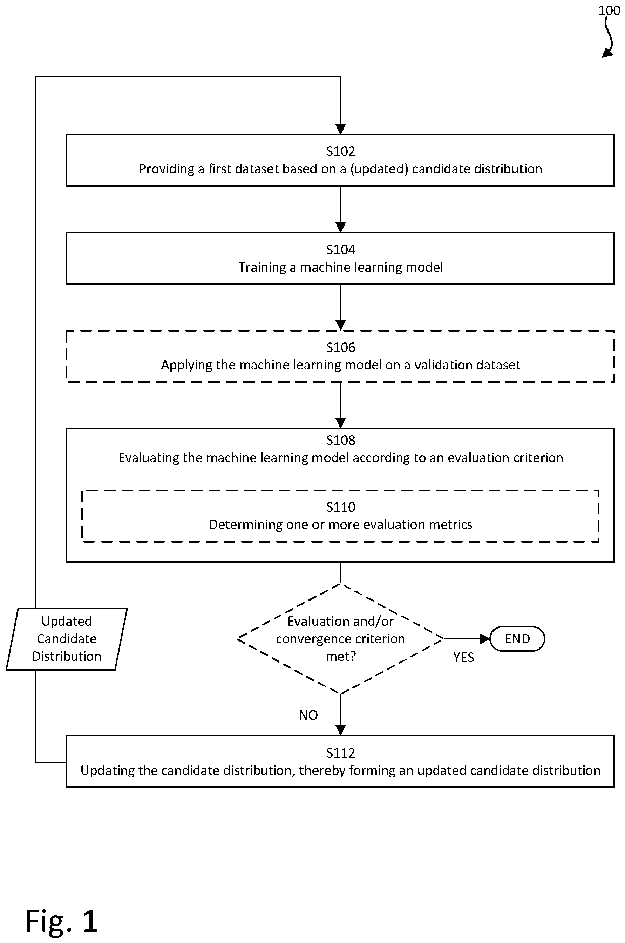

A method for determining a distribution of a training dataset for subsequent training of a machine learning model (sometimes referred to as just the model) of an automated driving system, as well as other related aspects thereof, will in the following be described with reference to Fig. 1 to 6.

In terms of making training and use of machine learning models more effective, it is common to try to optimize hyper parameters of the network, such as learning rate, drop-out rate, etc. Further, there has been endeavors to explore optimization of the model architecture (i.e. the model structure) of the network through so called neural architecture search (NAS), in which the optimal model architecture is found within a search space, based on a search strategy and a performance estimation strategy.

However, as realized by the inventors, it is also important to consider optimization across the training dataset used to train the model. The presently disclosed technology is thus directed to how to choose the training dataset in such a way as to optimize, or at least improve, the performance of the machine learning model trained on the training dataset, in particular given an already available dataset. The quality and characteristics of the training dataset play a crucial role in the performance of a machine learning model. Simply using all available training data for training the model does not necessarily result in the best performing model. In fact, there are several aspects when it comes to constructing a training dataset, which can help in achieving a well-performing model.

Firstly, the training dataset should be representative of the overall distribution of the data that the model will encounter during deployment. If the training dataset is biased or unrepresentative, the model may perform poorly on unseen data. For the same reasons, the training dataset should also be relevant for the task at hand. Including irrelevant or redundant samples can introduce noise and negatively impact model performance.

Secondly, the size of training dataset should be large enough to capture the underlying patterns and variations in the data. Insufficient data can lead to overfitting, where the model memorizes the training examples instead of learning the underlying relationships. At the same time, the training dataset should be small enough so as to not require excessive amounts of computational resources in the training process, as well as to not flood the model with unnecessary data.

Thirdly, the training dataset should be diverse to cover a diverse range of scenarios, objects, and variations present in the real-world application. This helps the model generalize well to different situations.

Further, quality of the data samples, and their annotations (for supervised leaning tasks), can also be crucial for model performance. The data samples should be free from noise for example, to allow the model to extract as much knowledge as possible from the data samples. Moreover, the annotations should be accurate and consistent, as noisy or incorrect annotations can mislead the model during training.

Even further, as stated previously, the balance of the training dataset is also an important aspect. For example, in classification tasks, the distribution of classes in the dataset should be balanced. An imbalanced dataset, where one class significantly outnumbers others, can lead to biased models that perform well on the majority class but poorly on minority classes. In a more general sense, data samples which constitutes rare or otherwise tricky scenarios can easily be drowned among vast amounts simple and readily available data samples, if not handled appropriately. Despite their rareness, these samples can form a crucial part in achieving a well-performing model. This can be especially important in the context of automated driving systems, since these have to be able to handle a wide variety of scenarios and perform well also in rare scenarios.

The herein disclosed technology provides for a solution to this problem, in a more automated manner. It makes use of a data distribution search, similar to the principles of NAS, as explained above. By the proposed technology, an optimal data distribution for a training dataset can be determined, given a set of already available training data samples, and an evaluation criterion. The resulting distribution help optimize the performance of the machine learning model, but it may also help guiding data collection activities of a fleet of vehicles.

The presently disclosed technology at least partly builds upon the realization that similar principles as in NAS can be applied to achieve a data distribution search, through which an optimal data distribution for the training dataset can be determined.

In short, the proposed method for determining the distribution of the training dataset is based on a data distribution search (DDS) which is given a search space (e.g. an already available dataset of training data samples). The DDS explores this search space to find a candidate for the optimal data distribution for the training dataset. The training dataset can then be formed by sampling the available dataset. Using this training set, the machine learning model may be trained and subsequently evaluated. Based on the evaluation, the candidate distribution may be updated, e.g. based on an optimization algorithm. These steps can be performed in a loop until an evaluation criterion and/or a convergence criterion is met. After the loop has finished, the then current distribution can be used to form the training dataset, either by sampling the given dataset, or by collecting new data in view of the determined distribution. In the following, the proposed method will be explained in more detail.

It should be noted that the wordings "optimal", "optimization", or similar, should be understood as something being made as "good as possible" within some restrictions. The restrictions may be a time restriction defined e.g. by the evaluation criterion and/or convergence criterion. The restrictions may further pertain to computational resources or numerical approximations. It may further be "optimal" or "optimized" in the sense that it is determined based on optimization algorithms, as known in the art. An "optimal distribution" or "optimal model performance" and the like, need not to be the single-most optimal solution (i.e. the global min/max), but could rather be a solution towards the single-most optimal solution.

Figure 1 is a schematic flowchart representation of a method 100 for determining a distribution of a training dataset for subsequent training of a machine learning model of an automated driving system. In other words, the training dataset on which the machine learning model may be subsequently trained on can be selected based on the determined distribution. Thus, the method 100 may be a method for determining a distribution to be used for a training dataset. The method 100 described in the following may be performed offline, e.g. by a server. The server may also be referred to as remote server, cloud server, central server, back-office server, fleet server, or back-end server. Once trained, the machine learning model may be deployed online in one or more vehicles of a fleet of vehicles. In some embodiments, the method 100 may be performed online, i.e. in a vehicle in which the model is deployed. In such case, the complexity and size limitations of the training dataset may be even higher (compared to the offline approach). However, this can still be achieved by the disclosed technology. In some embodiments, some steps of the method 100 may be performed by the server and some steps may be performed by the vehicle.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The above mentioned and described embodiments are only given as examples and should not be limiting to the present invention. Other solutions, uses, objectives, and functions within the scope of the invention as claimed below described patent claims should be apparent for the person skilled in the art.

The method 100 comprises providing S102 a first dataset by selecting, based on a candidate distribution, data samples from a second dataset of available training data. Put differently, the first dataset can be formed by sampling the second dataset according to the candidate distribution, such that the first dataset fulfills the candidate distribution.

The wording "distribution", or "data distribution", as used herein, may be understood as the way the training data samples of the training dataset (in this case) are distributed. For example, in a training dataset for an object classifying model, the distribution may indicate how many training data samples of each class is included in the training dataset. In another example, the distribution may be defined by a series of distribution weights, wherein each distribution weight is assigned to corresponding metadata associated with each data sample. The distribution weights may thus define what/to what extent data samples with certain metadata to be included in the training dataset. The metadata may for instance be categorical metadata. The categorical metadata may e.g. be different labels used to define a scene or scenario associated with a data sample. The categorical metadata may e.g. be time-of-day, country, day: yes/no, night: yes/no, rain: yes/no, sunshine: yes/no, highway: yes/no, city driving: yes/no, depicting a bus: yes/no, depicting children: yes/no, parking lot: yes/no, etc. The metadata may comprise binary data, e.g. yes/no. Alternatively, or in combination, the metadata may be indicative of a continuous parameter, such as a degree of rain. Such a continuous parameter may be represented as categorical (or discrete) data by a number of discrete values or ranges. It is to be noted that the data distribution may refer to many other aspects as well. The data distribution may thus be seen as specifying which types of data samples should be included, and to what extent.

The candidate distribution should be seen as a potential distribution to be used for the subsequent training of the machine learning model. The principles of the method 100 may then provide for ways of updating the candidate distribution until a desirable distribution (e.g. in the sense that it can result in a well-performing model) has been obtained. In particular, the method 100 may be performed iteratively (i.e. repeated), over a number of iterations (also referred to as loops). The candidate distribution can then be updated iteratively until a desired distribution has been obtained. The candidate distribution may thus be a distribution determined as a result of a previous iteration. Alternatively, the candidate distribution may be an initial distribution set as a starting point. How the method may be iterated will be further explained in the following.

The second dataset of available training data can for instance be a large dataset of already collected training data samples. The second dataset may thus be a training dataset comprising data samples already collected and stored at the server. The data samples may be collected previously by the fleet of vehicles using onboard sensors of the vehicles. The data samples may be obtained from other sources as well, such as datasets already available from third parties or collected by other entities than the fleet of vehicles. Alternatively, or in combination, the data samples may be synthetically generated data samples, e.g. though generative machine learning models, data augmentation, etc. The first dataset is then formed as a subset of the second dataset by sampling the second dataset according to the candidate distribution. Thus, the determined distribution provides for instructions on how to sample (or select data samples from) the larger second dataset of available training data. Put differently, the optimal candidate distribution is searched for within the pre-collected dataset that is the second dataset referred to above. In the subsequent training of the machine learning model, a training dataset (e.g. the first dataset) selected from the second dataset according to the determined distribution can be used, rather than training on the whole second dataset. This may result in a better performing, and more efficiently trained machine learning model.

The method 100 further comprises training S104 the machine learning model on the first dataset. Training S104 the machine learning model may be performed using any suitable procedure as readily understood by the skilled person. In general, the machine learning model may be trained to make predictions while minimizing a loss function. Training S104 the machine learning model may e.g. be performed by supervised, semi-supervised, or unsupervised leaning. The presently disclosed technology is thus not limited to any specific way of training the machine learning model.

The method 100 further comprises evaluating S108 the machine learning model according to an evaluation criterion. Evaluating S108 the machine learning model may thus provide information about how well the machine learning model performs after being trained on the first training dataset. The evaluation criterion may for instance provide information indicative of a performance of the machine learning model, or any other metrics. The evaluation criterion may comprise a plurality of sub-criterion. In other words, the machine learning model may be evaluated S108 according to a set of evaluation criteria. Each sub-criterion (i.e. each evaluation criterion of the set of evaluation criteria) may provide information indicative of different performance aspects of the machine learning model. The evaluation criterion (or any sub-criterion thereof) may for instance comprise classification metrics, such as accuracy, false positive/negative rate, precision, recall, logarithmic loss, F1-score etc. Alternatively, or in combination, the evaluation criterion (or any sub-criterion thereof) may comprise regression testing metrics, such as coefficient of determination (or R-squared), mean squared error, mean absolute error, etc. In case the method 100 are performed iteratively, the evaluation criterion may comprise comparing the trained machine learning model to a machine learning model trained in a previous iteration. In other words, the performance of the trained machine learning model may be compared to a previously trained machine learning model of a previous iteration. By the wording "regression testing metrics", it is herein meant metrics obtained from a regression testing procedure, in which previous test cases, which previous versions of the model has been tested on, are included. For example, previous test cases of which the previous version of the model (i.e. trained with a previous candidate distribution) has performed badly can be run to see if the updated model (i.e. trained with the updated candidate distribution) performs better. More specific ways of performing the evaluation S108 will be given below. In some embodiments, the evaluation step may be run for several models trained with different candidate distributions in parallel, to evaluate several models at once. This may especially be relevant when using in-vehicle evaluation, to effectively reduce the time for finding the next optimal distribution.

The method 100 further comprises updating S112 the candidate distribution in view of the evaluation, thereby forming an updated candidate distribution. In other words, the candidate distribution may be updated in view of the evaluation criterion. The candidate consolidation policy may be updated S114 in view of the evaluation such that the updated candidate consolidation policy potentially leads to better performance of the model. The wording "in view of the evaluation" may be understood as based on a fulfilment of the evaluation criterion. More specifically, in case the evaluation criterion is not fulfilled, the candidate distribution may be updated S112. The updated candidate distribution may then be used in a subsequent loop of repeating the method 100.

The candidate distribution may be updated S112 by an optimization algorithm. In other words, the updated candidate distribution may be determined using an optimization algorithm. Put differently, the whole process of determining the distribution may be performed by an optimization algorithm, i.e. select candidate distribution from search space, train model, evaluate trained model, and update candidate distribution based on evaluation. The optimization algorithm may for example be random search, naive random search, grid search, stochastic optimization such as genetic algorithm, Bayesian optimization, swarm optimization, or reinforcement learning.

If the evaluation criterion is fulfilled, the method 100 may be terminated, and the candidate distribution may be stored as the determined distribution for subsequent training of the machine learning model. Thus, the method 100 may comprise storing the candidate distribution as the determined distribution, in response to the evaluation criterion being met. Put differently, in case the evaluation criterion is fulfilled, the candidate distribution may be kept as it is. In other words, the updated candidate distribution may be selected as the current candidate distribution. This will be further explained in the following.

As stated above, the steps of the method 100 (denoted S102 to S112) may be repeated for the updated candidate distribution until the evaluation criterion and/or a convergence criterion of the trained machine learning model is met. In other words, the method 100 may be repeated with the updated candidate distribution as a new candidate distribution for the subsequent loop/iteration. The step of updating S112 the candidate distribution may thus be performed only if the evaluation criterion and/or the convergence criterion has not been met. Otherwise, the iteration may be terminated. By repeating the steps the candidate distribution can be continuously refined until the evaluation criterion and/or convergence criterion has been met. Put differently, the proposed solution provides for updating the candidate distribution based on the evaluation criterion in a loop to continuously refine the candidate distribution such that the performance of the model is improved. In the end (i.e. after iteration), an optimal candidate distribution, given the available data of the second dataset, can be obtained. Moreover, the first dataset sampled from the second dataset in the last iteration, can be used as the optimal subset of the second dataset for training of the model. Again, it may be optimal given the available data of the second dataset. This may thus be advantageous in that performance of the model can be improved in an efficient way by selection of the optimal subset of data from the second dataset of already available training data samples. Thus, there may be no need for collecting additional data samples. Moreover, the principles of the method 100 can be repeated again overtime, as the second dataset of available data evolves. In other words, if new data are added to the second dataset, the method 100 may be repeated again for a number of iterations, to possibly find a new optimal data distribution.

In some embodiments, only the evaluation criterion may be used as trigger to terminate the loop. In some embodiments, both the evaluation criterion and the convergence criterion may be used as triggers to terminate the loop. The loop may then be terminated if both, or if just one of the evaluation criterion and the convergence criterion are met. In some embodiments, only the convergence criterion may be used as trigger to terminate the loop.

The convergence criterion may be any suitable convergence criterion known in the art. For example, the convergence criterion may be a threshold value for a loss function. In another example, the convergence criterion may be to monitor changes in model parameters (such as the model weights). If the changes in model parameters between iterations become small, it may be an indication of convergence. In yet another example, the convergence criterion may be to monitor changes in model performance on a validation set. If the change in model performance between iterations become small, it may also be an indication of convergence. It is to be noted that the examples of convergence criterion mentioned above, as well as other possible criteria, can be combined. Thus, the convergence criterion may comprise one or more convergence metrics. Each convergence metric may correspond to a different way of measuring convergence. The convergence criterion may then be met when the one or more convergence metrics reaches a respective threshold value.

Evaluating S108 the machine learning model may comprise determining S110 one or more evaluation metrics associated with the evaluation criterion. The candidate distribution may then be updated S112 based on a comparison of the one or more evaluation metrics with a respective threshold value. The evaluation metrics may be seen as numeric values based on which the evaluation criterion can be formulated. The evaluation metrics may correspond to the different sub-criteria of the evaluation criterion referred to above. The evaluation criterion may be met when the one or more evaluation metrics reaches the respective threshold value. By evaluating the trained machine learning model based on the one or more evaluation metrics, a progress of the machine learning model over time (or rather over iterations) can be evaluated. As the method 100 traverses the space of possible candidate distributions, a directionality of the evaluation metrics can thus be observed. Based on this, the candidate distribution can then be updated.

In some embodiments, the method 100 further comprises applying S106 the machine learning model on a validation dataset. Put differently, the step of evaluating S108 the machine learning model may comprise applying S106 the machine learning model on the validation dataset. In other words, the machine learning model may be run on the validation dataset. The evaluation criterion may then be indicative of a performance of the machine learning model on the validation dataset. The validation dataset may be selected as a pre-existing dataset. The pre-existing dataset may e.g. be stored in the server performing the method. The pre-existing dataset may e.g. be a regulatory baseline dataset, or a dataset of a set of defined test scenarios that the model should be evaluated on to fulfill certain regulations, such as the so called EURO-NCAP.

It is however to be appreciated that the method 100, or at least parts of the method 100 may be performed online, in a vehicle. The validation dataset may then be formed by obtaining a validation data sample, and storing the validation data sample to the validation dataset, in response to the validation data sample fulfilling one or more validation triggers. The validation data sample(s) may be obtained by being collected by onboard sensors of the vehicle. Then, the vehicle may check whether the validation data sample(s) fulfills the one or more validation triggers. If so, the validation data sample(s) may be stored to the validation dataset. This may be repeated until the validation. A certain number of validation data samples of each validation trigger, or combination of validation triggers, can be collected and stored, until the validation dataset fulfills a validation dataset distribution (or such that the aggregated validation dataset has a certain distribution across the one or more validation triggers). If performed in the server, the validation data sample may be obtained from vehicles of the fleet of vehicles having collected the validation data sample by onboard sensors. Then the machine learning model may be applied S106 to the validation data samples fulfilling the one or more validation triggers (or belonging to the validation dataset). Alternatively, the vehicle may store the validation data samples which are found to fulfill the one or more validation triggers and/or transmit them to the server for forming the validation data set. It is to be appreciated that the check for whether a validation data sample fulfills the one or more validation triggers (and/or aggregation of the validation dataset such that it has a certain distribution across the one or more validation triggers) may as well be performed in the server. Thus, the vehicle may transmit any data samples, or just data samples fulfilling the one or more validation triggers.

Moreover, a set of validation triggers may be distributed among vehicles of the fleet of vehicles, together with the trained machine learning model. The set of validation triggers should herein be seen as conditions indicating what data samples is to be included in the evaluation. The validation triggers may e.g. be defined through metadata, such as the metadata described above. In response to a vehicle encountering a scenario fulfilling a validation trigger (i.e. a validation data sample), the vehicle may transmit sensor data pertaining to that scenario to the server. Alternatively, or in combination, the trained machine learning model may be evaluated (in the vehicle) on that scenario in parallel with the operational platform of the vehicle (i.e. in so-called shadow-mode testing). The evaluation metrics may be stored in the vehicle, and transmitted to the server. The server may then (if needed) update the candidate distribution, based on the evaluation metrics, and later retrain the machine learning model on a new dataset determined based on the updated candidate distribution.

It is to be noted that evaluating S108 the machine learning model may be done both using the pre-existing validation dataset, and using dynamically collected validation data samples based on validation triggers, as explained above.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

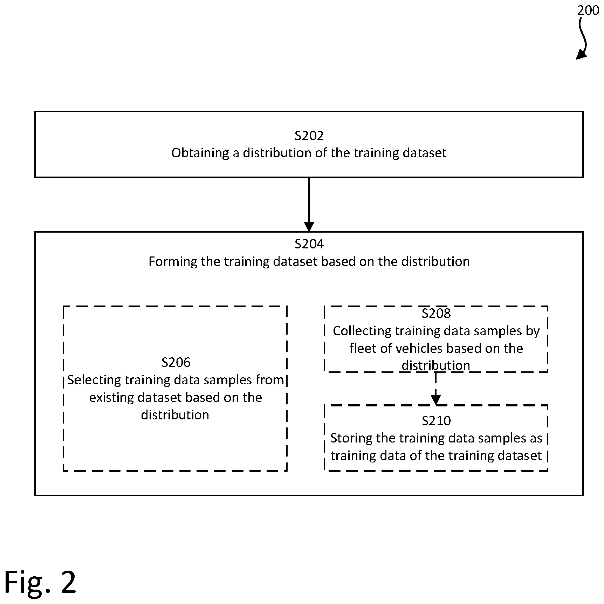

Figure 2 is a schematic flowchart representation of a method 200 for forming a training dataset for subsequent training of a machine learning model.

Below, the different steps of the method 200 are described in more detail. Even though illustrated in a specific order, the steps of the method 200 may be performed in any suitable order as well as multiple times. Thus, although Fig. 2 may show a specific order of method steps, the order of the steps may differ from what is depicted. In addition, two or more steps may be performed concurrently or with partial concurrence. For example, the optional step denoted S206 may be performed independently of the other optional steps denoted S208 and S210. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 200 will become apparent from the present disclosure. The above mentioned and described embodiments are only given as examples and should not be limiting to the present invention. Other solutions, uses, objectives, and functions within the scope of the invention as claimed below described patent claims should be apparent for the person skilled in the art.

The method 200 comprises obtaining S202 a distribution of the training dataset determined according to the method 100 described above in connection with Fig. 1. In other words, the distribution, which the training dataset should fulfill, may be obtained by performing the steps of the method 100 described above. Put differently, the method 200 may comprise obtaining S202 a distribution for the training dataset, the distribution having been determined according to the method 100 as described above.

The method 200 may further comprise forming S204 the training dataset based on the obtained distribution. In other words, the training dataset can be formed according to said distribution.

The training dataset may be formed S204 by selecting S206 training data samples from an existing dataset of training data samples based on the obtained distribution. In other words, forming S204 the training dataset may comprise selecting S206 training data samples from the existing training dataset according to the distribution, i.e. such that the training dataset fulfills the distribution. This may be advantageous in a case where vast amounts of training data are already available, or if no more data can be collected. Forming the training dataset using the obtained distribution can then help towards increasing, or even optimizing, the performance of a model subsequently trained on the formed training dataset, given the existing dataset of available training data samples. The existing training dataset may be the second dataset as referred to above. Thus, the training dataset formed by the present method 200 can be the first dataset (as referred to above), sampled form the second dataset during the final iteration of the loop. This formed training dataset can thus correspond to the subset of the second dataset which can lead to the most performant model, as determined from the optimization process.

In some embodiments, the training dataset is formed S204 by collecting S208 training data samples by a fleet of vehicles based on the distribution, and storing S210 said training data samples as training data of the training dataset. Thus, data samples may be collected S208 and stored S210 based on the distribution in the sense that the training dataset then fulfills the distribution. In other words, information indicative of the distribution (e.g. a set of triggering conditions associated with the distribution) may be transmitted to the fleet of vehicle, based on which the vehicles can collect the relevant sensor data for use as training data samples. Upon collecting relevant training data samples, the vehicles may transmit said samples to the server. Thereby, a guided data collection can be realized, which utilizes the distribution determined according to the principles describe above as well as fleet insight. This may be advantageous in a case where not enough training data samples are available. Moreover, the guided data collection defined by the steps denoted S208 and S210 as described above may be used in combination with selecting S206 training data samples from an existing dataset. In particular, the guided data collection can be used as a complement to selecting training data samples from the existing dataset if for instance there are some relevant data samples missing, or not enough relevant data, in the existing dataset. In other words, the guided data collection can be used to fill gaps in the existing dataset in order to fulfill the distribution.

The method 200 may further comprise training the machine learning model on the formed training dataset.

The term "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining the distribution may comprise receiving or collecting the distribution from another device or storage device. Alternatively, obtaining the distribution may comprise determining the distribution in accordance with the method 100 described above in connection with Fig. 1.

Executable instructions for performing these functions are, optionally, included in a non-transitory computer-readable storage medium or other computer program product configured for execution by one or more processors.

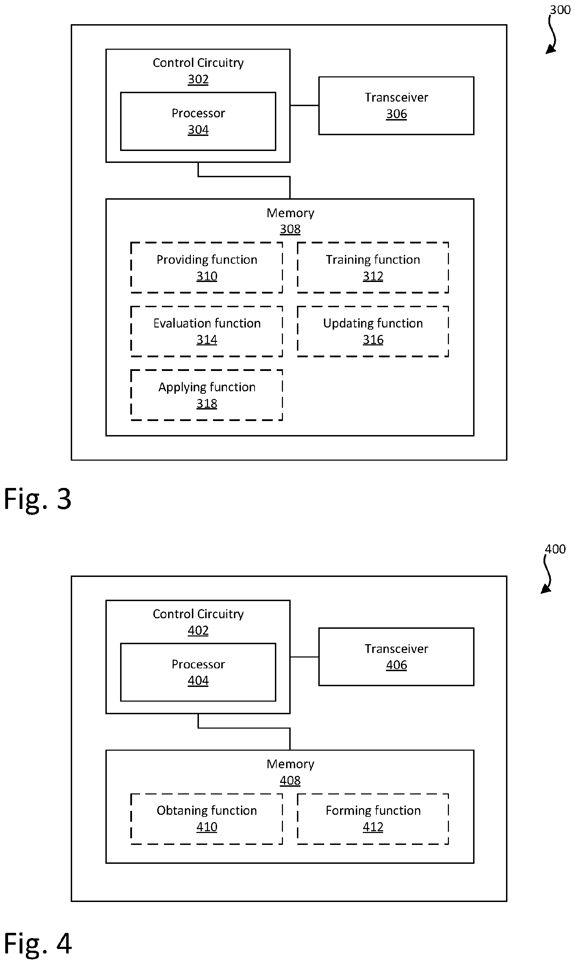

Figure 3 is a schematic illustration of a device 300, for determining a distribution of a training dataset for subsequent training of a machine learning model of an automated driving system, in accordance with some embodiments. The device 300 may be configured to perform the method 100 as described in connection with Fig. 1.

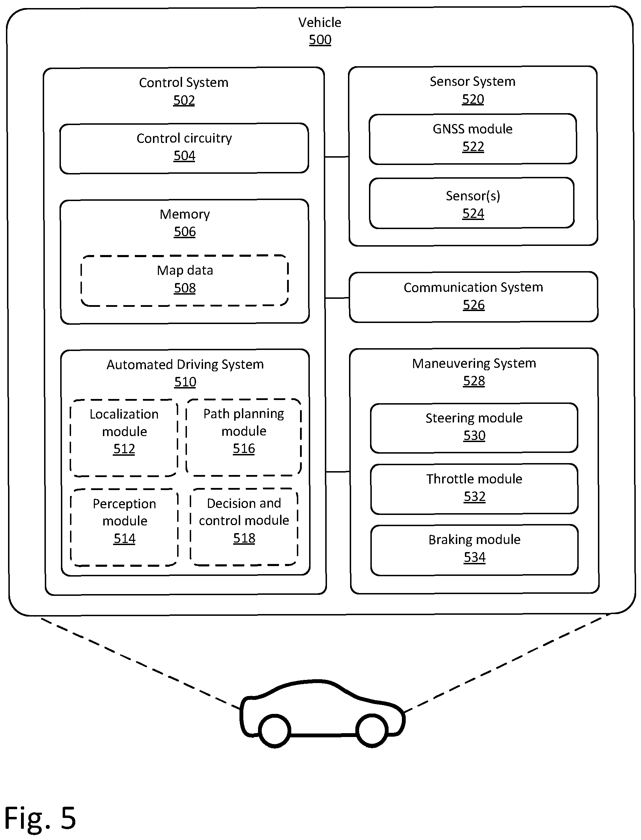

The device 300 as described herein refers to any computer system or general computing device. The device 300 may be provided as part of a vehicle, such as the vehicle described below in connection with Fig. 5. Alternatively, the device 300 may be a server (may also be referred to as remote server, cloud server, central server, back-office server, fleet server, or back-end server) or a networked device configured to provide various computing services, data storage, processing capabilities, or resources to clients or users over a communication network. In the present case, the wording "clients" refers to connected vehicles (such as the vehicle 500 described below) of a fleet of vehicles. Even though the device 300 is herein illustrated as one device, the device 300 may be a distributed computing system, formed by a number of different computational devices.

The device 300 comprises control circuitry 302. The control circuitry 302 may physically comprise one single circuitry device. Alternatively, the control circuitry 302 may be distributed over several circuitry devices.

As shown in the example of Fig. 3, the device 300 may further comprise a transceiver 306 and a memory 308. The control circuitry 302 being communicatively connected to the transceiver 306 and the memory 308. The control circuitry 302 may comprise a data bus, and the control circuitry 302 may communicate with the transceiver 306 and/or the memory 308 via the data bus.

The control circuitry 302 may be configured to carry out overall control of functions and operations of the device 300. The control circuitry 302 may include a processor 304, such as a central processing unit (CPU), microcontroller, or microprocessor. The processor 304 may be configured to execute program code stored in the memory 308, in order to carry out functions and operations of the device 300. The control circuitry 302 is configured to perform the steps of the method 100 as described above in connection with Fig. 1. The steps may be implemented in one or more functions stored in the memory 308.

The transceiver 306 is configured to enable the device 300 to communicate with other entities, such as vehicles or other servers. The transceiver 306 may both transmit data from and receive data to the device 300.

The memory 308 may be a non-transitory computer-readable storage medium. The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long-term data storage and a volatile memory that functions as system memory for the device 300. The memory 308 may exchange data with the circuitry 302 over the data bus. Accompanying control lines and an address bus between the memory 308 and the circuitry 302 also may be present.

Functions and operations of the device 300 may be implemented in the form of executable logic routines (e.g., lines of code, software programs, etc.) that are stored on a non-transitory computer readable recording medium (e.g., the memory 308) of the device 300 and are executed by the circuitry 302 (e.g., using the processor 304). Put differently, when it is stated that the circuitry 302 is configured to execute a specific function, the processor 304 of the circuitry 302 may be configured execute program code portions stored on the memory 308, wherein the stored program code portions correspond to the specific function. Furthermore, the functions and operations of the circuitry 302 may be a stand-alone software application or form a part of a software application that carries out additional tasks related to the circuitry 302. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the device 300 is described.

The control circuitry 302 is configured to provide a first dataset by selecting, based on a candidate distribution, data samples from a second dataset of available training data. This may be performed e.g. by execution of a providing function 310.

The control circuitry 302 is further configured to train the machine learning model on the first dataset. This may be performed e.g. by execution of a training function 312.

The control circuitry 302 is further configured to evaluate the machine learning model according to an evaluation criterion. This may be performed e.g. by execution of an evaluation function 314.

The control circuitry 302 is further configured to update the candidate distribution in view of the evaluation, thereby forming an updated candidate distribution. This may be performed e.g. by execution of an updating function 316.

The control circuitry 302 may be further configured to apply the machine learning model on a validation dataset. This may be performed e.g. by execution of an applying function 318. The evaluation criterion may then be indicative of a performance of the machine learning model on the validation dataset.

It should be noted that the principles, features, aspects, and advantages of the method 100 as described above in connection with Fig. 1, are applicable also to the device 300 as described herein. In order to avoid undue repetition, reference is made to the above.

Figure 4 is a schematic illustration of a device 400, for forming a training dataset for subsequent training of a machine learning model, in accordance with some embodiments. The device 400 may be configured to perform the method 200 as described in connection with Fig. 2.

It should be noted that the principles and aspects, of the device 300 as described above in connection with Fig. 3, are applicable also to the device 400 as described herein. For instance, the device 400 comprises control circuitry 402 having a processor 404 as the device 300 described above. Moreover, the device 400 may comprise a transceiver 406, and a memory 408. The two devices may be provided as two separate devices, or as one common device. In order to avoid undue repetition, reference is made to the above. In the following, focus will instead be on functionalities that differs from the device 300 as described above.

The control circuitry 402 is configured to obtain a distribution of the training dataset determined according to the method 100 as described above in connection with Fig. 1. This may be performed e.g. by an obtaining function 410.

The control circuitry 402 is further configured to form the training dataset based on the obtained distribution. This may be performed e.g. by execution of a forming function 412.

It should be noted that the principles, features, aspects, and advantages of the method 100 as described above in connection with Fig. 2, are applicable also to the device 400 as described herein. In order to avoid undue repetition, reference is made to the above.

Figure 5 is a schematic illustration of a vehicle 500 in accordance with some embodiments. The vehicle 500 is equipped with an Automated Driving System (ADS) 510. As used herein, a "vehicle" is any form of motorized transport. For example, the vehicle 500 may be any road vehicle such as a car (as illustrated herein), a motorcycle, a (cargo) truck, a bus, a smart bicycle, etc.

The vehicle 500 comprises a number of elements which can be commonly found in autonomous or semi-autonomous vehicles. It will be understood that the vehicle 500 can have any combination of the various elements shown in Fig. 5. Moreover, the vehicle 500 may comprise further elements than those shown in Fig. 5. While the various elements is herein shown as located inside the vehicle 500, one or more of the elements can be located externally to the vehicle 500. Further, even though the various elements are herein depicted in a certain arrangement, the various elements may also be implemented in different arrangements, as readily understood by the skilled person. It should be further noted that the various elements may be communicatively connected to each other in any suitable way. The vehicle 500 of Fig. 5 should be seen merely as an illustrative example, as the elements of the vehicle 500 can be realized in several different ways.

The vehicle 500 comprises a control system 502. The control system 502 is configured to carry out overall control of functions and operations of the vehicle 500. The control system 502 comprises control circuitry 504 and a memory 506. The control circuitry 502 may physically comprise one single circuitry device. Alternatively, the control circuitry 502 may be distributed over several circuitry devices. As an example, the control system 502 may share its control circuitry 504 with other parts of the vehicle. The control circuitry 502 may comprise one or more processors, such as a central processing unit (CPU), microcontroller, or microprocessor. The one or more processors may be configured to execute program code stored in the memory 506, in order to carry out functions and operations of the vehicle 500. The processor(s) may be or include any number of hardware components for conducting data or signal processing or for executing computer code stored in the memory 506. In some embodiments, the control circuitry 504, or some functions thereof, may be implemented on one or more so-called system-on-a-chips (SoC). As an example, the ADS 510 may be implemented on a SoC. The memory 506 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 506 may include database components, object code components, script components, or any other type of information structure for supporting the various activities of the present description.

In the illustrated example, the memory 506 further stores map data 508. The map data 508 may for instance be used by the ADS 510 of the vehicle 500 in order to perform autonomous functions of the vehicle 500. The map data 508 may comprise high-definition (HD) map data. It is contemplated that the memory 508, even though illustrated as a separate element from the ADS 510, may be provided as an integral element of the ADS 510. In other words, according to some embodiments, any distributed or local memory device may be utilized in the realization of the present inventive concept. Similarly, the control circuitry 504 may be distributed e.g. such that one or more processors of the control circuitry 504 is provided as integral elements of the ADS 510 or any other system of the vehicle 500. In other words, according to an exemplary embodiment, any distributed or local control circuitry device may be utilized in the realization of the present inventive concept.

The vehicle 500 further comprises a sensor system 520. The sensor system 520 is configured to acquire sensory data about the vehicle itself, or of its surroundings. The sensor system 520 may for example comprise a Global Navigation Satellite System (GNSS) module 522 (such as a GPS) configured to collect geographical position data of the vehicle 500. The sensor system 520 may further comprise one or more sensors 524. The one or more sensor(s) 524 may be any type of on-board sensors, such as cameras, LIDARs and RADARs, ultrasonic sensors, gyroscopes, accelerometers, odometers etc. It should be appreciated that the sensor system 520 may also provide the possibility to acquire sensory data directly or via dedicated sensor control circuitry in the vehicle 500.

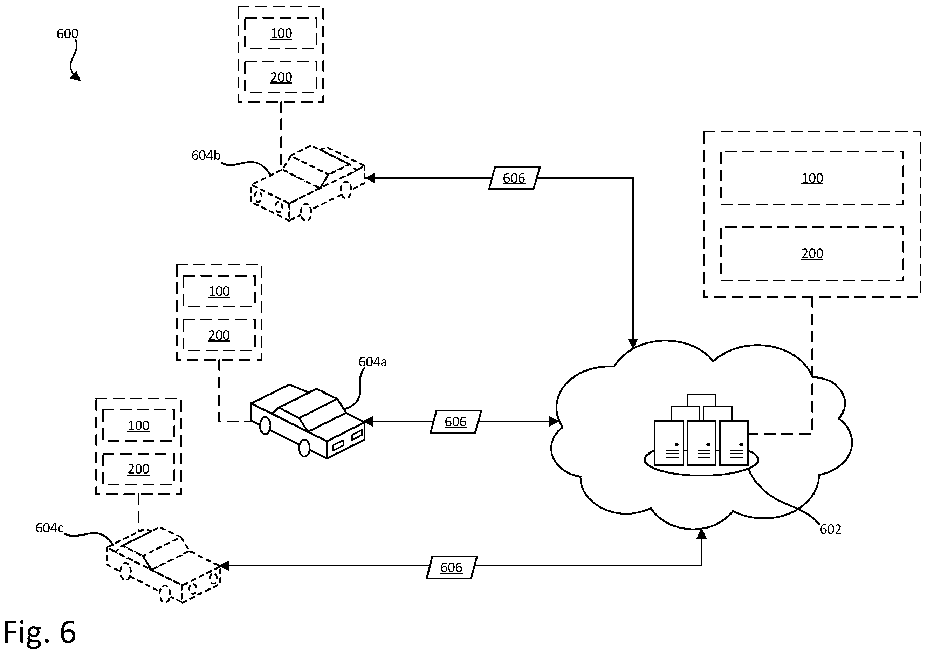

The vehicle 500 further comprises a communication system 526. The communication system 526 is configured to communicate with external units, such as other vehicles (i.e. via vehicle-to-vehicle (V2V) communication protocols), remote servers (e.g. cloud servers, as further shown below in connection with Fig. 6), databases or other external devices, i.e. vehicle-to-infrastructure (V2I) or vehicle-to-everything (V2X) communication protocols. The communication system 526 may communicate using one or more communication technologies. The communication system 526 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 500 or with local infrastructure elements. ETSI is working on cellular standards for vehicle communication and for instance 5G is considered as a suitable solution due to the low latency and efficient handling of high bandwidths and communication channels.

The communication system 526 may further provide the possibility to send output to a remote location (e.g. remote operator or control center) by means of the one or more antennas. Moreover, the communication system 526 may be further configured to allow the various elements of the vehicle 500 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 500 further comprises a maneuvering system 520. The maneuvering system 528 is configured to control the maneuvering of the vehicle 500. The maneuvering system 528 comprises a steering module 530 configured to control the heading of the vehicle 500. The maneuvering system 528 further comprises a throttle module 532 configured to control actuation of the throttle of the vehicle 500. The maneuvering system 528 further comprises a braking module 534 configured to control actuation of the brakes of the vehicle 500. The various modules of the steering system 528 may receive manual input from a driver of the vehicle 500 (i.e. from a steering wheel, a gas pedal and a brake pedal respectively). However, the maneuvering system 528 may be communicatively connected to the ADS 510 of the vehicle, to receive instructions on how the various modules should act. Thus, the ADS 510 can control the maneuvering of the vehicle 500.

As stated above, the vehicle 500 comprises an ADS 510. The ADS 510 may be part of the control system 502 of the vehicle. The ADS 510 is configured to carry out the functions and operations of the autonomous functions of the vehicle 500. The ADS 510 can comprise a number of modules, where each module is tasked with different functions of the ADS 510.

The ADS 510 may comprise a localization module 512 or localization block/system. The localization module 512 is configured to determine and/or monitor a geographical position and heading of the vehicle 500, and may utilize data from the sensor system 520, such as data from the GNSS module 522. Alternatively, or in combination, the localization module 512 may utilize data from the one or more sensors 524. The localization system may alternatively be realized as a Real Time Kinematics (RTK) GPS in order to improve accuracy.

The ADS 510 may further comprise a perception module 514 or perception block/system. The perception module 514 may refer to any commonly known module and/or functionality, e.g. comprised in one or more electronic control modules and/or nodes of the vehicle 500, adapted and/or configured to interpret sensory data - relevant for driving of the vehicle 500 - to identify e.g. obstacles, vehicle lanes, relevant signage, appropriate navigation paths etc. The perception module 514 may thus be adapted to rely on and obtain inputs from multiple data sources, such as automotive imaging, image processing, computer vision, and/or in-car networking, etc., in combination with sensory data e.g. from the sensor system 520.

An object detection model for detecting and/or classifying object in the surrounding environment of the vehicle 500 (or other types of machine learning models) may be part of the ADS 510, or more specifically part of the perception module 514. The vehicle 500 is configured to perform the functions of the method 100 determining a distribution of a training dataset for subsequent training of a machine learning model of the ADS. These functions may be implemented in a separate computing device provided in the vehicle, such as the device 300 described above in connection with Fig. 3. The computing device may comprise control circuitry configured to perform the steps of the method 100 as described above in connection with Fig. 1. Alternatively, the functions may be distributed over one or more modules, systems, or elements of the vehicle 500, as readily understood by the person skilled in the art. For example, the control circuitry 504 of the control system 502 may be configured to perform the steps of the method 100. The vehicle 500 may be further configured to perform the functions of the method 200 for forming a training dataset for subsequent training of the machine learning model as described above in connection with Fig. 2. Moreover, the vehicle 500 may perform the subsequent training of the machine learning model in the vehicle.

The localization module 512 and/or the perception module 514 may be communicatively connected to the sensor system 520 in order to receive sensor data from the sensor system 520. The localization module 512 and/or the perception module 514 may further transmit control instructions to the sensor system 520.

The ADS may further comprise a path planning module 516. The path planning module 516 is configured to determine a planned path of the vehicle 500 based on a perception and location of the vehicle as determined by the perception module 514 and the localization module 512 respectively. A planned path determined by the path planning module 516 may be sent to the maneuvering system 528 for execution.

The ADS may further comprise a decision and control module 518. The decision and control module 518 is configured to perform the control and make decisions of the ADS 510. For example, the decision and control module 518 may decide on whether the planned path determined by the path-planning module 516 should be executed or not.

It should be understood that parts of the described solution may be implemented either in the vehicle 500, in a system located external to the vehicle, or in a combination of internal and external to the vehicle; for instance in a server in communication with the vehicle, a so called cloud solution, as is further explained below in connection with Fig. 6. The different features and steps of the embodiments may be combined in other combinations than those described. Further, the elements of the vehicle 500 (i.e. the systems and modules) may be implemented in different combinations than those described herein.

Figure 6 illustrates, by way of example, a system 600 for ADS development. More specifically, the system 600 may be configured to implement the principles of the presently disclosed technology. The system 600 should therefore be seen as a non-limiting example of a realization of the herein disclosed aspects of the present technology For instance, the system 600 may be configured to perform the methods 100, 200 described above in connection with Fig. 1 and 2 respectively. Thus, any features or principles described above in connection with Fig. 1 and 2 are applicable also to the system 600 as described herein and vice versa, unless otherwise stated.

The system 600 comprises a server 602 (or remote, cloud, central, back-office, fleet, or back-end server), referred to in the following as the remote server 602 or just server 602. The server may be configured as any of the devices 300, 400 as described above in connection with Fig. 3 and 4 respectively. Thus, any features described in connection with the devices 300, 400 may be applicable also to the server 602. As illustrated, the server 602 may be provided in the cloud, i.e. as a cloud-implemented server. Advantageously, the server 602 may perform more computational heavy tasks, or manage and coordinate the fleet of vehicles (further described below), such as aggregating data from, or distributing data to, the different vehicles of the fleet.

The system 600 further comprises one or more vehicles 604a-c, also referred to as a fleet of vehicles 604a-c. The one or more vehicles 604a-c may be vehicles as described above in connection with Fig. 5. Thus, the one or more vehicles 604a-c may be configured to perform the method 100 as described in connection with Fig. 1. The vehicles 604a-c may be further configured to perform the method 200 as described in connection with Fig. 2.

The one or more vehicles 604a-c are communicatively connected to the remote server 602 for transmitting and/or receiving data 606 between the vehicles and the server. The one or more vehicles 604a-c may be further communicatively connected to each other. The data 606 may be any kind of data, such as communication signals, or sensor data. More specifically, the data 606 may comprise training data samples acquired by the vehicles 604a-c, or any information indicative of a determined distribution for a training dataset, a dataset according to said distribution, an (re-)trained machine learning model, triggering conditions for what data samples to collect, etc. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area (LAN) (e.g. IEEE 802.11) based solutions. The sever 602 comprises a suitable memory and control circuitry, for example, one or more processors or processing circuitry, as well as one or more other components such as a data interface and transceiver. The server 602 may also include software modules or other components, such that the control circuity can be configured to execute machine-readable instructions loaded from memory to implement the steps of the method to be performed.

The fleet illustrated in Fig. 6 comprises three vehicles, a first, second and third vehicle 604a-c, by way of example. The system 600 may however comprise any number of vehicles 604a-c.

In the following, some ways of implementing the principles of the presently disclosed technology within the system 600 will be given. However, it is to be appreciated that these examples should not be seen as limiting, as several different ways of implementing it may be possible, depending on a specific realization. For further details regarding the different steps, reference is made to Fig. 1 and 2 above, in order to avoid undue repetition.

In general, the steps of the method 100 for determining a distribution of a training dataset may be performed locally within a vehicle 604a-c. Alternatively, or in combination, the steps of the method 100 may be performed in the server 602. If performed in a vehicle of the fleet, the vehicle may then transmit the determined distribution to the server 602. As described above, part of the step of evaluating S108 the machine learning model comprises forming a validation dataset, either through sampling an existing dataset, or through data collection. In the latter case, the server 602 may distribute triggering conditions to the fleet of vehicles for collecting the relevant data. In some embodiments, the step of training S104 the machine learning model on the first dataset may be performed by the server 602. The server may then transmit the trained machine learning model to one or more vehicles of the fleet of vehicles. The one or more vehicles may then perform the step of evaluating S108 the machine learning model, e.g. through so-called shadow-mode testing. The results of the evaluation may then be transmitted back to the server 602 for potential updating S112 of the candidate distribution.

Similarly, the steps of the method 200 for forming the training dataset may be performed by the server 602, and/or a vehicle of the fleet of vehicles. In the former case, the server may transmit instructions (e.g. triggering conditions) to the fleet of vehicles indicating what data samples to collect. Put differently, the server 602 may transmit data indicative of the determined distribution to the vehicles. As a vehicle encounters a new data sample (e.g. a new scenario), the vehicle may check whether it fulfills the triggering conditions (or belongs to the distribution). If so, the vehicle may transmit the data sample to the server.

The above-described process of the system 600 is to be understood as a non-limiting example of the presently disclosed technology for improved understanding. Further variants are apparent from the present disclosure and readily realized by the person skilled in the art.

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for determining a distribution of a training dataset for subsequent training of a machine learning model of an automated driving system, the method (100) comprising:
providing (S102) a first dataset by selecting, based on a candidate distribution, data samples from a second dataset of available training data;
training (S104) the machine learning model on the first dataset;
evaluating (S108) the machine learning model according to an evaluation criterion; and
updating (S112) the candidate distribution in view of the evaluation, thereby forming an updated candidate distribution.

2. The method (100) according to claim 1, wherein the steps of the method (100) are repeated for the updated candidate distribution until the evaluation criterion and/or a convergence criterion of the trained machine learning model is met.

3. The method (100) according claim 1 or 2, wherein the candidate distribution is updated (S112) by an optimization algorithm.

4. The method (100) according to any one of the claims 1 to 3, wherein evaluating (S108) the machine learning model comprises determining (S110) one or more evaluation metrics associated with the evaluation criterion; and
wherein the candidate distribution is updated (S112) based on a comparison of the one or more evaluation metrics with a respective threshold value.

5. The method (100) according to claim 4, wherein the evaluation criterion is met when the one or more evaluation metrics reaches the respective threshold value.

6. The method (100) according to any one of the claims 1 to 5, further comprising applying (S106) the machine learning model on a validation dataset, and
wherein the evaluation criterion is indicative of a performance of the machine learning model on the validation dataset.

7. The method (100) according to claim 6, wherein the validation dataset is formed by:
obtaining a validation data sample, and
in response to the validation data sample fulfilling one or more validation triggers, storing the validation data sample to the validation dataset.

8. A computer program product comprising instructions, which when the program is executed by a computing device, causes the computing device to carry out the method (100) according to any one of the claims 1 to 7.

9. A device (300) for determining a distribution of a training dataset for subsequent training of a machine learning model of an automated driving system, the device (300) comprising control circuitry (302) configured to:
provide a first dataset by selecting, based on a candidate distribution, data samples from a second dataset of available training data;
train the machine learning model on the first dataset;
evaluate the machine learning model according to an evaluation criterion; and
update the candidate distribution in view of the evaluation, thereby forming an updated candidate distribution.

10. The device (300) according to claim 9, wherein the control circuitry (302) is further configured to apply the machine learning model on a validation dataset, and
wherein the evaluation criterion is indicative of a performance of the machine learning model on the validation dataset.

11. A method (200) for forming a training dataset for subsequent training of a machine learning model, the method (200) comprising:
obtaining (S202) a distribution of the training dataset determined according to the method (100) according to any one of the claims 1 to 7; and
forming (S204) the training dataset based on the obtained distribution.

12. The method (200) according to claim 11, wherein the training dataset is formed (S204) by selecting (S206) training data samples from an existing dataset of training data samples based on the obtained distribution.

13. The method (200) according to claim 11 or 12, wherein the training dataset is formed (S204) by:
collecting (S208) training data samples by a fleet of vehicles based on the distribution, and
storing (S210) said training data samples as training data of the training dataset.

14. A computer program product comprising instructions, which when the program is executed by a computing device, causes the computing device to carry out the method (200) according to any one of the claims 11 to 13.

15. A device (400) for forming a training dataset for subsequent training of a machine learning model, the device (400) comprising control circuitry (402) configured to:
obtain a distribution of the training dataset determined according to the method (100) according to any one of the claims 1 to 7; and
form the training dataset based on the obtained distribution.
